# EUROPEAN PATENT APPLICATION

(11) **EP 1 034 881 A1**
(43) Date of publication of application: **13.09.2000**
(21) Application number: 99104810.9
(22) Date of filing: 11.03.1999
(51) Int. Cl.: B23Q 39/02, B23B 3/06, B23Q 1/56, B23Q 1/60

(54) **Two-end simultaneous finishing CNC machine**

(71) Applicant: Wu, Hsuan-Lung, Nan Twen Area, Taichung City (TW)
(72) Inventor: Wu, Hsuan-Lung, Nan Twen Area, Taichung City (TW)
(74) Representative: Reichel, Wolfgang, Dipl.-Ing.

(57) **Abstract**

A two-end simultaneous finishing CNC machine, of which the innovations are that a main machining platform is equipped with a minimum of two parallel slide rails (200, 201) on each of which are installed two blade mounts (21, 22) and two clamp mounts (23, 24) that are capable of movement in alignment along the slide rails (200, 201) such that the intervals between two blade mounts (21, 22) and two clamp mounts (23, 24) can be varied and, furthermore, the relative positions of the blade mounts and clamp mounts are adjustable. One clamp or two clamp mounts can be utilized at the same time for holding as the blade mount is moved towards the working object (30) to machine a single end or two ends in a single operation. The invention herein is also capable of finishing the surface of the working object (30) without limitation as to the dimensions of the working object (30) to thereby broaden the scope and flexibility of the machining methods and allows for the faster completion of various metal finishing processes.

## Description

### Background of the Invention

### 1) Field of the Invention

The invention herein relates to a two-end simultaneous finishing CNC machine of an innovative structure that is capable of machining one end or two ends of different sized working objects in a single operation.

### 2) Description of the prior art

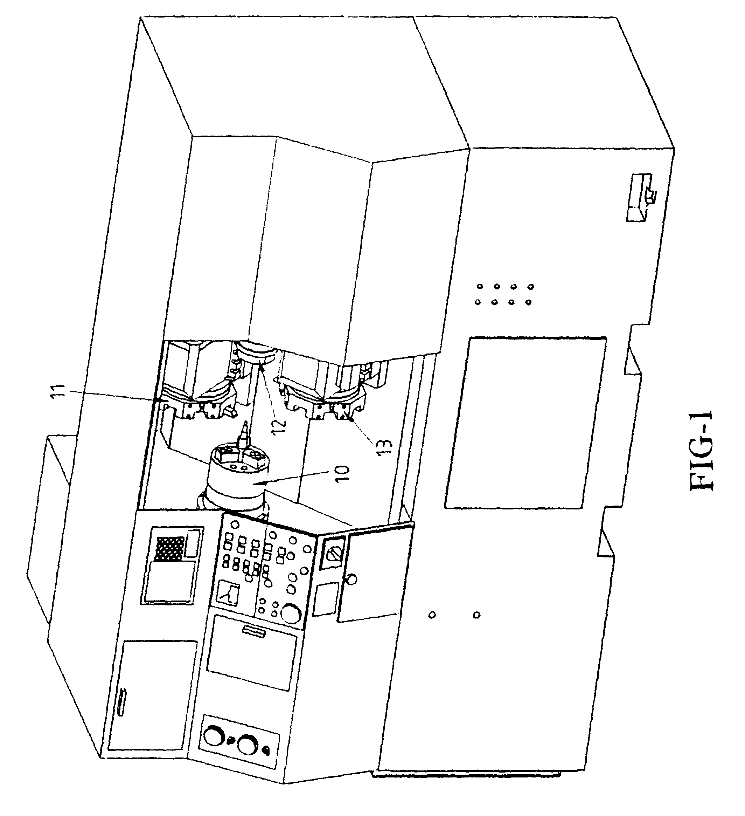

The blade mount and the clamp mount of conventional CNC finishing machines are typically installed in a lathe configuration with the blade mount situated opposite from the clamp mount, and after the working object is clamped in the clamp mount the blade mount is driven towards the clamp mount to execute various machining tasks. However, since the single clamp design requires manual re-clamping to machine the top and bottom of the working object and, furthermore, the vertical depth of the clamp mount cannot accommodate working objects of excessive length. The industry has developed the finishing machine shown in FIG. 1. The said finishing machine is equipped with two blade mounts and two clamps mounts on the main machining platform and, furthermore, the two clamp mounts and the two blade mounts are at opposing positions such that after the working object is clamped in the first clamp mount 10 and machined by the first blade mount 11. The working object is moved from the first clamp mount 10 to the second clamp mount 12 and then the second blade mount 13 is utilized to machine the other end. The process of machining the two ends of the work-ing object involves more than one step and a number of factors are apparent.

First, since the said finishing machine finishes the two ends of the same working object in two separate operations and, furthermore, is incapable of machining both ends simultaneously, an inconvenient manual mechanical control adjustment procedure involving several steps, including the removal of the working object, is required to machine the top and bottom material. In addition, the re-clamping in the second clamp could result in an over-machining error, carelessness may damage the working object beyond the limits of corrective repair. For example, when the working object is moved over to the second clamp mount 12 and precision control is not possible, the accurate machining the other end of the working object with the second blade mount 13 will be difficult because of imprecise clamping.

Second, whether the movement of the blade mount upward and downward or leftward and rightward is quite minor, if the movement of the clamp mount is not flexible and the clamp depth is insufficient the machining area of the working object will be restricted and preclude tooling access, especially if the working object to be machined is of excessively small or large dimensions.

In view of the situation, the inventor of the invention herein considered in great detail the said drawbacks and, based on many years of experience in the research and development of various specialized mechanical equipment and the marketing of such products, constructed and tested several finishing machine prototypes.

It is the object underlying the invention to improve the known two-end simultaneous finishing CNC machine of which the main platform is equipped with two blade mounts and two clamp mounts.

### Summary of the Invention

The object is achieved by providing a two-end simultaneous finishing CNC machine comprised of two parallel slide rails on each of which are installed two blade mounts and two clamp mounts that are capable of movement in alignment along the slide rails such that the positions of the two blade mounts and the two clamp mounts can be adjusted relative to the clamped working object to flexibly execute single end, double end, or surface finishing.

Accordingly, two ends of the working object can be machined at the same time and, furthermore, allows a wide range of finishing possibilities on all sections of the working object.

Another objective of the invention herein is to provide a two-end simultaneous finishing CNC machine, of which since the distance of the intervals between the two clamp mounts are adjustable by movement along the slide rails working objects of extended length can be clamped in any position by the two clamp mounts at the same time, thereby increasing the scope of machining options and enabling the machining of working objects having greater dimensions.

This objective is solved by a two-end simultaneous finishing CNC machine with the features of claim 4.

To enable the examination committee to further understand the technology, methods and other functions underlying the claims of the invention herein, the brief description of the drawings below is followed by the detailed description of example of the invention as shown in connection with the embodiments.

### Brief Description of the Drawings

- Figure 1: is an isometric drawing of a conventional CNC finishing machine.
- Figure 2: is an isometric drawing of the invention herein.
- Figure 3: is an orthographic drawing of the invention herein performing the short operation machining of two ends of the working object.

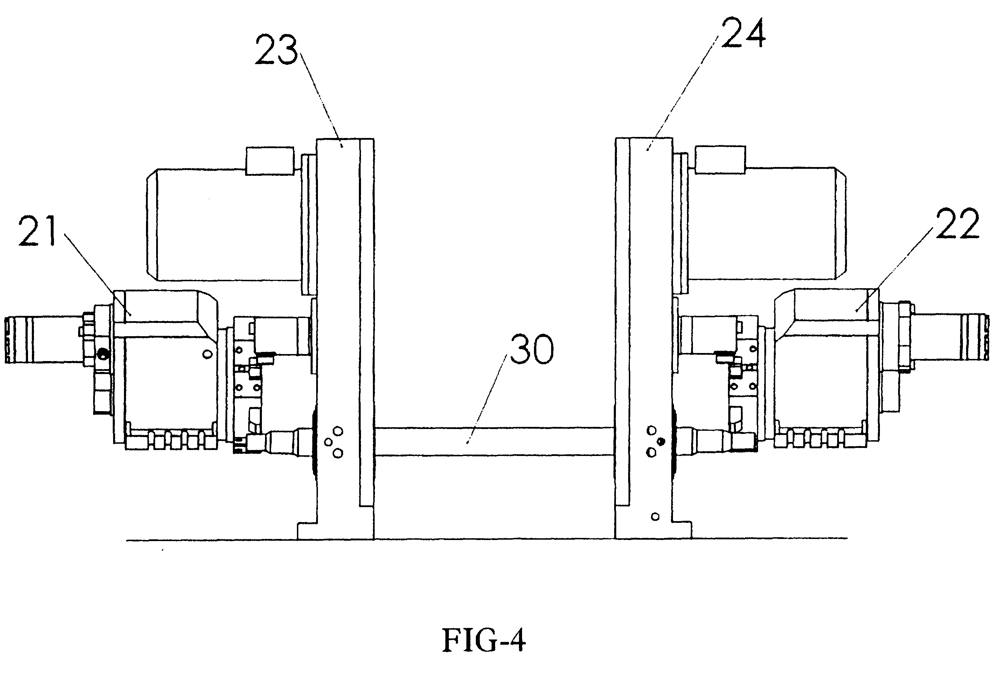

- Figure 4: is an orthographic drawing of the invention herein performing the long operation machining of the two ends of the working objects.
- Figure 5: is an orthographic drawing of the invention herein performing the front section surface finishing of the working object.
- Figure 6: is an orthographic drawing of the invention herein performing the back section surface finishing of the working object.

### Detailed Description of the Invention

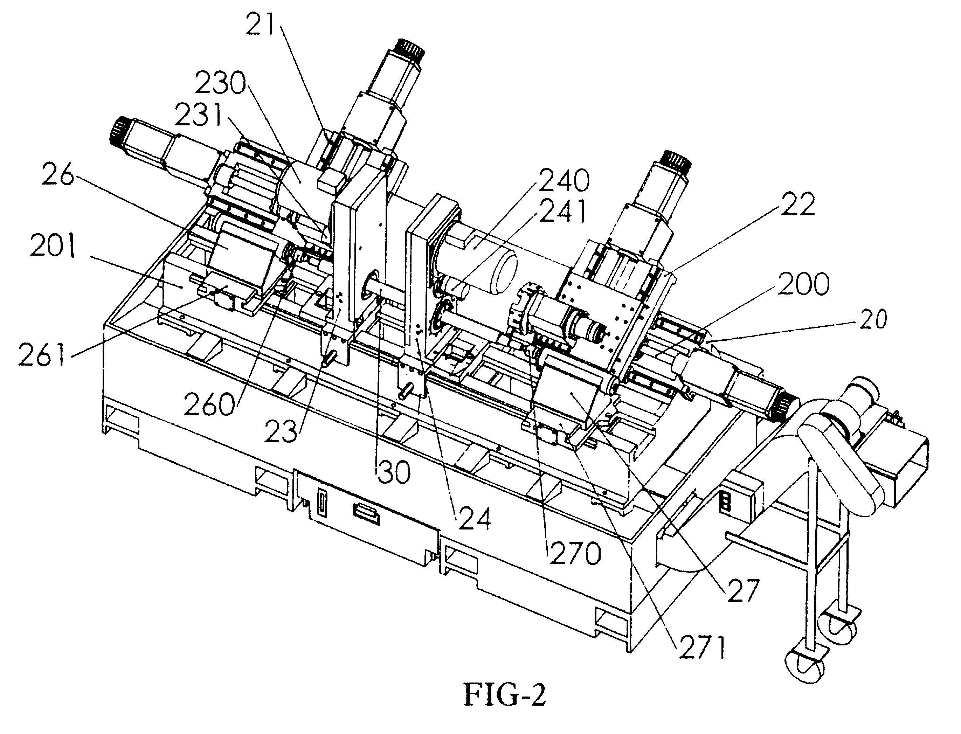

Referring to Fig. 2, the preferred embodiment of the simultaneous two-end simultaneous finishing CNC machine of the invention herein, the first slide rail 200 which is spindle-shaped and the second slide rail 201 which is dovetailed are respectively positioned in parallel on the slanted bed surface 20 of the main machining platform, of which the first slide rail 200 is capable of machining in a different secondary feed axis such that when of the first blade mount 21 and the second blade mount 22 are respectively installed on the said slide rail, the two blade mounts are not only capable of extending and retracting the cutter or other selected tool up and down, but are also capable of sliding to the left and right along the same axis. At the same time, the first clamp mount 23 and the second clamp mount 24 are installed onto the second slide rail 201 such that the two clamp mounts can be moved to alter the proximal distance between them and, furthermore, when also properly synchronized with the motion of the two blade mounts, are capable of relative positional variances to support a broader and more flexible range of finishing possibilities. The first clamp mount 23 is equipped with a first motor 230 and a decoder 231 and the second clamp mount 24 is equipped with a second motor 240 and a decoder 241, with the first motor 230 and the second motor 240 driving the said two clamp mounts so that the two clamp mounts are synchronously movable along the second slide rail 201.

Furthermore, the retaining components 260 and 270 are installed at the two ends of second slide rail 201 on which the said two, clamps are positioned, and, furthermore, with the first bed 26 and second bed 27 of the wedge-shaped fourths slide rails 261 and 271 positioned under the second slide rail 201, thereby utilizing the leftward and rightward movement capability of the second slide rail 201 as well as the forward and backward movement capability of the fourths slide rails 261 and 271 to appropriately bring the two clamp mounts closer together or farther apart.

As such, since the blade mounts, the clamp mounts, the motors, and the beds are aligned along the rail paths and enabled to slide freely in parallel while allowing for relative interval variability, the following working object 30 machining advantages are provided during the finishing process.

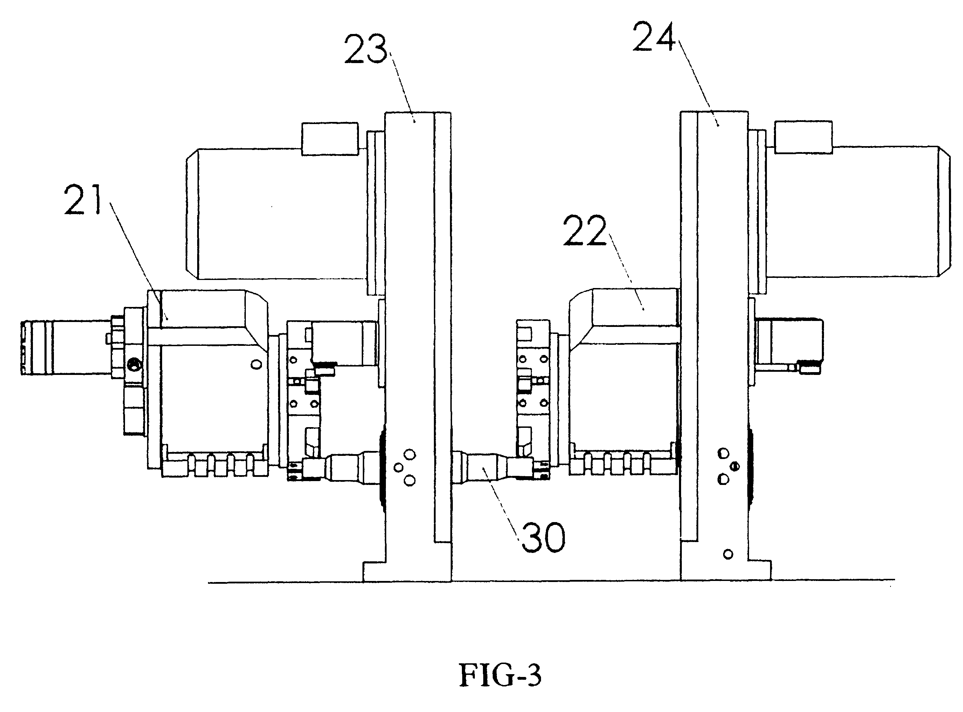

First, due to the two blade mounts and the two clamp mounts of the invention herein, whether the working object 30 is clamped in either of the clamp mounts or in both of the clamp mounts at the same time, the blade mount can be moved as in a conventional finishing machine to shape one end during an independent finishing task and, therefore, this process shall not be further elaborated; the actual innovation of the invention herein is that since the two blade mounts can be respectively and simultaneously moved horizontally by sliding, the appropriate adjustment of the relative positions between the two blade mounts and two clamp mounts allows the two ends of the working object to be machined simultaneously in a single finishing operation, without requiring troublesome top and bottom material removal or the finishing of the ends in alternating steps; in FIG. 3 for example, the working object 30 is clamped in the first clamp mount 23 (or the second clamp 24) when the length is shorter, while the two blade mounts are moved towards the said clamp mount for cutting to thereby rapidly and, furthermore, accurately complete the machining of the two ends simultaneously in a single finishing operation and, as indicated in fourths the two clamp mounts are utilized together to clamp working object 30 to prevent the ends from becoming bent when the working object 30 is of extended length and, furthermore, the two blade mounts are pulled back against the working object 30 to accurately and, furthermore, rapidly machine the two ends. The said examples illustrate that the design of the invention herein provide for the precision machining of working objects 30 having a wide range of different physical dimensions.

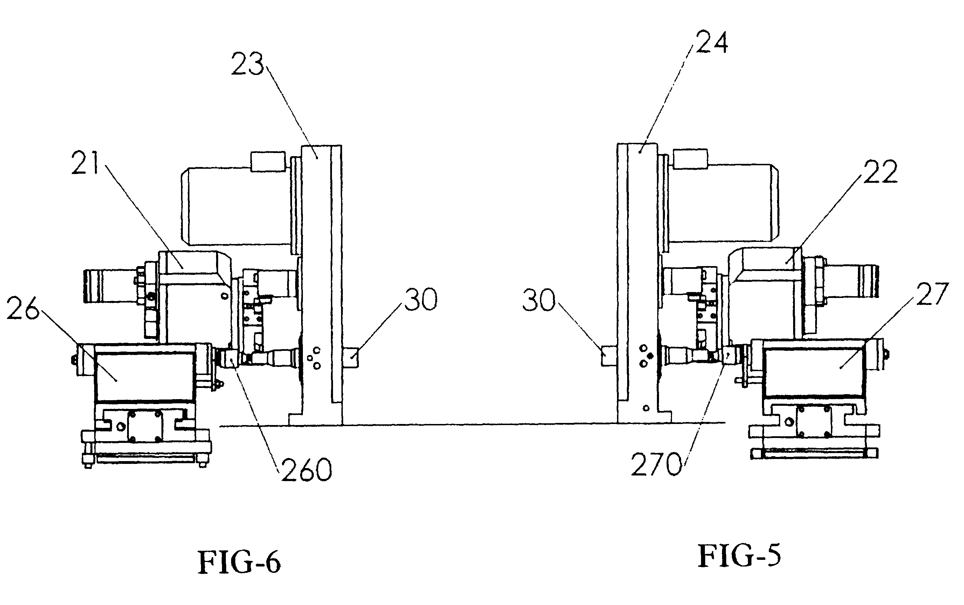

Furthermore, in addition to the said single end machining as well as other typical processes such as forming, boring or drilling, and cutting, the invention herein is capable of a range of working object surface finishing operations referring to FIG. 5. The working object 30 is first clamped in the second clamp mount 24 and then the retaining component 270 is brought against the end section of the working object 30 to prevent bending and as the clamp mount rotates the working object 30, the second blade mount 22 on the first slide rail 200 is moved towards it to complete the surface finishing of the front section. Referring now to FIG. 6, the second bed 27 moves the work-ing object 30 back from the first clamp mount 23 in which it is clamped and, furthermore, is maintained in position by the first bed 26 and then the first blade mount 21 executes the surface finishing of the rear section, utilizing the intervals of changing movement between the clamp mounts to rapidly complete the surface finishing of the working object 30 and it may be observed at the same time that the axial direction of the said movements of the two clamp mounts are designed to handle a vertical depth of considerable length, which permits highly flexible operations that enables special machining tasks that cannot be accomplished with conventional finishing machines.

In summary of the foregoing disclosure, since the two-end simultaneous finishing CNC machine of the invention herein utilizes two blade mounts and two clamp mounts that flexibly move in parallel alignment which are not only capable of accurate independent machining and simultaneously machining two ends in a single operation, but are also capable of completing the surface finishing of the working object, without limitation as to the dimensions of the working object, and thereby broaden the scope of machining possibilities and, furthermore, quicken the finishing process, decrease labor and operating expenditures, reduce production costs, while also allowing the fabrication of metal products at higher levels of precision and quality; therefore, the invention herein is demonstrably both practical and progressive; furthermore, the structure of the invention herein has not been observed among available products in the same category, in public utilization, or in related publications prior to the submittal of the new patent application and as such complies with all new patent requirements; therefore, the invention herein is lawful forwarded in application for review and the granting of the commensurate patent rights.

## Claims

1. A two-end simultaneous finishing CNC machine of which the main machine platform is equipped with two blade mounts and two clamp mounts,
characterized in,
that a main machining platform is equipped with a minimum of two parallel slide rails (200, 201) on each of which are installed the said two blade mounts (21, 22) and the said two clamp mounts (23, 24) that are capable of movement in alignment along the said slide rails (200, 201) such that the positions of said two blade mounts (21, 22) and the said two clamp mounts (23, 24) can be adjusted relative to the clamped working object (30) to flexibly execute single end, double end, or surface finishing.

2. A two-end simultaneous finishing CNC machine according to claim 1,
characterized in,
that the first slide rail (200) is spindle-shaped.

3. A two-end simultaneous finishing CNC machine according to claim 1,
characterized in,
that the second slide rail (201) is dovetailed.

4. A two-end simultaneous finishing CNC machine according to claim 1,
characterized in,
that said retaining components (260, 270) of the beds (26, 27) are installed on the two ends of the said two slide rails (200, 201) on which the said clamp mounts (23, 24) are positioned and the said retaining components (260, 270) are movable relative to the said clamp mounts (23, 24) to clamp the ends of the working object (30).

5. A two-end simultaneous finishing CNC machine according to claim 4,
characterized in,
that the first clamp mount (23) is equipped with a first motor and an accelerator and the second clamp mount (24) is equipped with a second motor and an accelerator, with the first motor (230) and the second motor (240) driving the said two clamp mounts (23, 24) so that the said two clamp mounts (23, 24) are synchronously movable along the second slide rail.

6. A two-end simultaneous finishing CNC machine according to claim 4,
characterized in,
that each of the said beds can be equipped with an additional rail below the said slide rail (200, 201) to enable the said beds to move leftward and rightward as well as forward and rearward.
